# EUROPEAN PATENT APPLICATION

(11) **EP 4 790 297 A1**
(43) Date of publication of application: **12.08.2026**
(21) Application number: 26156884.4
(22) Date of filing: 06.02.2026
(51) Int. Cl.: F16L 19/06, F16L 19/10

(54) **TWIN FERRULE TUBE FITTING**

(30) Priority: 07.02.2025 US 202563755951 P; 26.01.2026 US 202619460019
(71) Applicant: Crane Instrumentation & Sampling PFT Corp., Spartanburg, South Carolina 29305 (US)
(72) Inventor: Armocida, Michael Anthony, Spartanburg, South Carolina, 29305 (US); Knockeart, James Michael, Spartanburg, South Carolina, 29305 (US); Kulkarni, Gajanan Murlidharrao, 411036 Pune, Maharashtra (IN)
(74) Representative: Grünecker Patent- und Rechtsanwälte PartG mbB

(57) **Abstract**

A twin ferrule tube fitting includes a body configured to be received over a section of tubing, a nut configured to be received by the body over the section of tubing, a front ferrule disposed between the body and the nut, and a rear ferrule disposed between the body and the nut. Tightening the nut into the body causes the front ferrule and the rear ferrule to be driven into the section of tubing, and tightening the nut into the body causes a butt seal to be formed between a protruding surface of an interior of the body and a surface of the tubing.

## Description

### CROSS-REFERENCE TO RELATED APPLICATION AND PRIORITY CLAIM

This application claims priority under 35 U.S.C. § 119(e) to U.S. Provisional Patent Application No. 63/755,951 filed on February 7, 2025, which is hereby incorporated by reference in its entirety.

### TECHNICAL FIELD

The present disclosure relates generally to tubing or piping for carrying media, and in particular to a twin ferrule tube fitting.

### BACKGROUND

A twin ferrule tube fitting is a type of fitting which is used to secure metallic tubing to other metallic tubing, to a valve, or other component in a fluid system. However, current tube fittings have various shortcomings.

### SUMMARY

This disclosure relates to a twin ferrule tube fitting.

In various examples of this disclosure, a twin ferrule tube fitting includes a body configured to be received over a section of tubing. The twin ferrule tube fitting also includes a nut configured to be received by the body over the section of tubing. The twin ferrule tube fitting also includes a front ferrule disposed between the body and the nut. The twin ferrule tube fitting also includes a rear ferrule disposed between the body and the nut. Tightening the nut into the body causes the front ferrule and the rear ferrule to be driven into the section of tubing, and tightening the nut into the body causes a butt seal to be formed between a protruding surface of an interior of the body and a surface of the tubing.

In one or more of the above examples, the rear ferrule includes a concave shape, and wherein the concave shape of the rear ferrule interfaces with a corresponding convex surface of the nut.

In one or more of the above examples, the rear ferrule includes a convex shape, and wherein the convex shape of the rear ferrule interfaces with a corresponding concave surface of the nut.

In one or more of the above examples, the rear ferrule includes a head portion, the head portion including a curved surface on one side of the head portion that interfaces with the corresponding concave surface of the nut, and a flat surface on an opposite side of the head portion from the curved surface, wherein the flat surface of the head portion of the rear ferrule interfaces with a flat surface of the front ferrule.

In one or more of the above examples, the twin ferrule tube fitting further includes at least one indicator formed on the nut, wherein the at least one indicator is configured to indicate a tightening condition of the nut into the body.

In one or more of the above examples, the at least one indicator includes at least one groove formed in the nut.

In one or more of the above examples, the at least one groove is configured to be visible when the nut is partially tightened into the body and configured to not be visible when the nut is fully tightened into the body.

In one or more of the above examples, the at least one groove includes two grooves formed in the nut.

In one or more of the above examples, the at least one indicator includes a chamfer disposed on the nut that is configured to not be visible when the nut is correctly installed within the body and that is configured to be visible when the nut is in various states of mis-installation with the body.

In one or more of the above examples, the protruding surface of the interior of the body is part of an inclined surface of the body and the surface of the tubing is a substantially flat surface.

In one or more of the above examples, the twin ferrule tube fitting further includes a hard stop created by contact between a protrusion of the nut and an angled surface of the interior of the body.

In one or more of the above examples, the hard stop is positioned distal from the front ferrule and the rear ferrule and adjacent an end potion of the body.

In one or more of the above examples, the hard stop is positioned adjacent to the front ferrule.

In various examples of this disclosure, a method of installing a twin ferrule tube fitting includes tightening a nut received into a body over a section of tubing to cause a front ferrule and a rear ferrule to be driven into the section of tubing. The body is received over the section of tubing. The front ferrule is disposed between the body and the nut. The rear ferrule is disposed between the body and the nut. The method further includes tightening the nut into the body to cause a butt seal to be formed between a protruding surface of an interior of the body and a surface of the tubing.

In one or more of the above examples, the rear ferrule includes a concave shape, and wherein the concave shape of the rear ferrule interfaces with a corresponding convex surface of the nut during tightening of the nut received into the body.

In one or more of the above examples, the rear ferrule includes a convex shape, and wherein the convex shape of the rear ferrule interfaces with a corresponding concave surface of the nut during tightening of the nut received into the body.

In one or more of the above examples, the rear ferrule includes a head portion, the head portion including a curved surface on one side of the head portion that interfaces with the corresponding concave surface of the nut during tightening of the nut received into the body, and a flat surface on an opposite side of the head portion from the curved surface, wherein the flat surface of the head portion of the rear ferrule interfaces with a flat surface of the front ferrule during tightening of the nut received into the body.

In one or more of the above examples, the method further includes using at least one indicator formed on the nut to verify a tightening condition of the nut into the body, wherein the at least one indicator includes at least one groove formed in the nut, and wherein the at least one groove is visible when the nut is partially tightened into the body and not visible when the nut is fully tightened into the body.

In one or more of the above examples, the method further includes using at least one indicator formed on the nut to verify a tightening condition of the nut into the body, wherein the at least one indicator includes a chamfer disposed on the nut that is not visible when the nut is correctly installed within the body and that is visible when the nut is in various states of mis-installation with the body.

In one or more of the above examples, the method further includes encountering a hard stop during tightening of the nut created by contact between a protrusion of the nut and an angled surface of the interior of the body.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication or interaction between two or more elements, whether or not those elements are in physical contact with one another. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like.

As used here, terms and phrases such as "have," "may have," "include," or "may include" a feature (like a number, function, operation, or component such as a part) indicate the existence of the feature and do not exclude the existence of other features. Also, the phrase "at least one of," when used with a list of items, means that different combinations of one or more of the listed items may be used, and only one item in the list may be needed. For example, as used here, the phrases "A or B," "at least one of A and/or B," or "one or more of A and/or B" may include all possible combinations of A and B. For example, "A or B," "at least one of A and B," and "at least one of A or B" may indicate all of (1) including at least one A, (2) including at least one B, or (3) including at least one A and at least one B. Further, as used here, the terms "first" and "second" may modify various components regardless of importance and do not limit the components. These terms are only used to distinguish one component from another. For example, a first component and a second component may indicate different components from each other, regardless of the order or importance of the components. A first component may be denoted a second component and vice versa without departing from the scope of this disclosure.

It will be understood that, when an element (such as a first element) is referred to as being (operatively or communicatively) "coupled with/to" or "connected with/to" another element (such as a second element), it can be coupled or connected with/to the other element directly or via a third element. In contrast, it will be understood that, when an element (such as a first element) is referred to as being "directly coupled with/to" or "directly connected with/to" another element (such as a second element), no other element (such as a third element) intervenes between the element and the other element.

It should be understood that the term "plurality," as used herein, means two or more. The terms "outboard" and "inboard" refer to the relative position of different features relative to a common axis or plane. The term "coupled" means connected to or engaged with, whether directly or indirectly, for example with an intervening member, and does not require the engagement to be fixed or permanent, although it may be fixed or permanent (or integral). The terms "first," "second," and so on, as used herein are not meant to be assigned to a particular component so designated, but rather are simply referring to such components in the numerical order as addressed, meaning that a component designated as "first" may later be a "second" such component, depending on the order in which it is referred. For example, a "first" diameter may be later referred to as a "second" diameter depending on the order in which they are referred. It should also be understood that designation of "first" and "second" does not necessarily mean that the two components or values so designated are different, meaning for example a first diameter may be the same as a second diameter, with each simply being applicable to separate components. The terms "vertical" and "horizontal" refer to the orientation of various components as shown in the drawings, but with the understanding that those components may be rotated and used in other orientations.

The terms and phrases as used here are provided merely to describe some embodiments of this disclosure but not to limit the scope of other embodiments of this disclosure. It is to be understood that the singular forms "a," "an," and "the" include plural references unless the context clearly dictates otherwise. All terms and phrases, including technical and scientific terms and phrases, used here have the same meanings as commonly understood by one of ordinary skill in the art to which the embodiments of this disclosure belong. It will be further understood that terms and phrases, such as those defined in commonly-used dictionaries, should be interpreted as having a meaning that is consistent with their meaning in the context of the relevant art and will not be interpreted in an idealized or overly formal sense unless expressly so defined here. In some cases, the terms and phrases defined here may be interpreted to exclude embodiments of this disclosure.

Definitions for other certain words and phrases are provided throughout this patent document. Those of ordinary skill in the art should understand that in many if not most instances, such definitions apply to prior as well as future uses of such defined words and phrases.

None of the description in this application should be read as implying that any particular element, step, or function is an essential element that must be included in the claim scope. The scope of patented subject matter is defined only by the claims. Moreover, none of the claims is intended to invoke 35 U.S.C. § 112(f) unless the exact words "means for" are followed by a participle. Use of any other term, including without limitation "mechanism," "module," "device," "unit," "component," "element," "member," "apparatus," "machine," "system," "processor," or "controller," within a claim is understood by the Applicant to refer to structures known to those skilled in the relevant art and is not intended to invoke 35 U.S.C. § 112(f).

### BRIEF DESCRIPTION OF THE DRAWINGS

For a more complete understanding of this disclosure and its advantages, reference is now made to the following description, taken in conjunction with the accompanying drawings, in which:
FIG. 1A illustrates an example of a prior twin ferrule tube fitting;
FIG. 1B illustrates another example of a prior twin ferrule tube fitting;
FIG. 1C illustrates another example of a prior twin ferrule tube fitting;
FIG. 2A illustrates an example twin ferrule tube fitting in accordance with this disclosure;
FIG. 2B illustrates an enlarged view of the example twin ferrule tube fitting of FIG. 2A in accordance with this disclosure;
FIG. 3A illustrates another example twin ferrule tube fitting in accordance with this disclosure;
FIG. 3B illustrates an enlarged view of the example twin ferrule tube fitting of FIG. 3A in accordance with this disclosure;
FIG. 4A illustrates another example twin ferrule tube fitting in accordance with this disclosure;
FIG. 4B illustrates an enlarged view of the example twin ferrule tube fitting of FIG. 4A in accordance with this disclosure;
FIG. 5A illustrates another example twin ferrule tube fitting in accordance with this disclosure;
FIG. 5B illustrates an enlarged view of the example twin ferrule tube fitting of FIG. 5A in accordance with this disclosure;
FIG. 6A illustrates an example tube fitting showing a butt seal design in accordance with this disclosure;
FIG. 6B illustrates an example of a previous design for a butt seal;
FIGS. 7A-7C illustrate an example socket-style rear ferrule interface in accordance with this disclosure;
FIGS. 8A-8C illustrate another example socket-style rear ferrule interface in accordance with this disclosure;
FIGS. 9A-9K illustrate various views of an example built-in fitting makeup indicator in accordance with this disclosure; and
FIGS. 10A-10D illustrate various views of another example built-in fitting makeup indicator in accordance with this disclosure.

### DETAILED DESCRIPTION

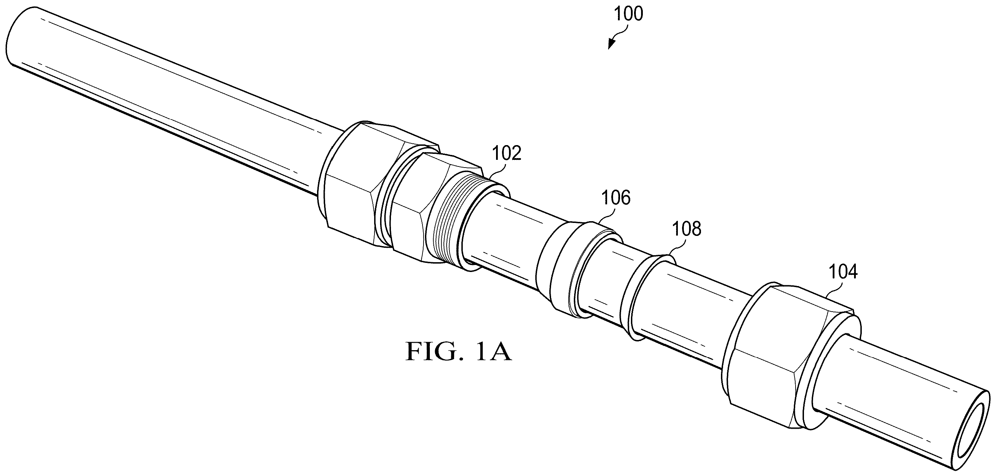

FIGS. 1A through 10D, discussed below, and the various embodiments used to describe the principles of the present disclosure in this patent document are by way of illustration only and should not be construed in any way to limit the scope of the disclosure. Those skilled in the art will understand that the principles of this disclosure may be implemented in any suitably arranged device or system.

As noted above, a twin ferrule tube fitting is a type of fitting which is used to secure metallic tubing to other metallic tubing, to a valve, or other component in a fluid system. However, current tube fittings have various shortcomings. These prior seals can have difficulties with penetrating into harder types of tubing, a high amount of force is typically needed to drive the ferrules into the tubing, the tube fittings can have lower pressure ratings, and the tube fittings do not include a way to determine whether the ferrules are misoriented or mis-installed.

FIGS. 1A-1C illustrate examples of prior twin ferrule tube fittings. It will be understood that the example tube fittings are merely used for illustrative purposes, and that prior twin ferrule tube fittings can come in a variety of configurations. As shown in FIG. 1A, a tube fitting 100 includes two sections of tubing to be joined using a fitting 102 and a nut 104. FIG. 1A shows an example of a female nut fitting, but a male nut fitting can also be used. As also shown in FIG. 1A, prior to installation of the nut 104 on the tubing, a front ferrule 106 and a rear ferrule 108 are sleeved onto the tubing. In this example, when the nut 104 is threaded onto the fitting 102, the front ferrule 106 and the rear ferrule 108 are pushed within the connection between the fitting 102 and the nut 104 to reinforce the connection and create an internal seal within the connection. The nut 104 may be hand tightened initially and then fully tightened using a tool such as one or more wrenches.

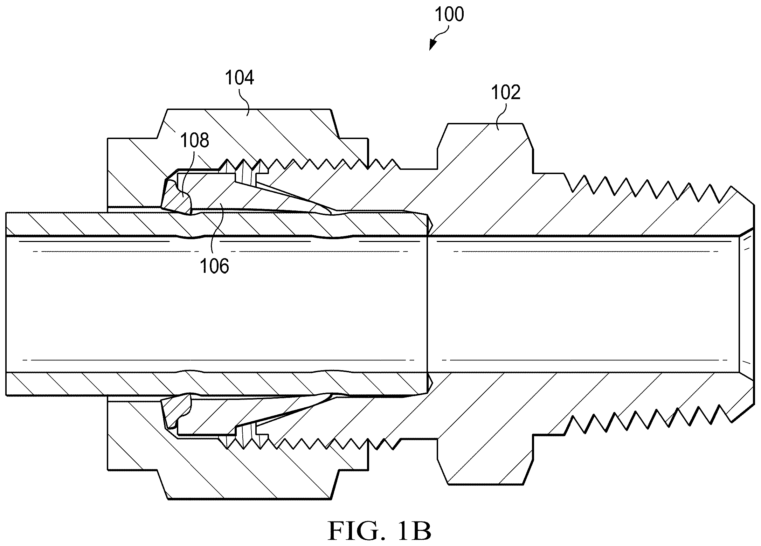

For example, FIG. 1B shows the female nut 104 threaded onto the fitting 102. When the nut 104 is tightened, the front ferrule 106 is driven underneath the fitting 102, and the rear ferrule 108 is driven into the front ferrule 106. As shown in FIG. 1B, the front ferrule 106 and the rear ferrule 108 can be shaped to mesh into one another. Driving the front ferrule 106 and the rear ferrule 108 together also causes, as shown in FIG. 1B, the piping to compress or crimp at points of contact between the piping and the ferrules 106, 108.

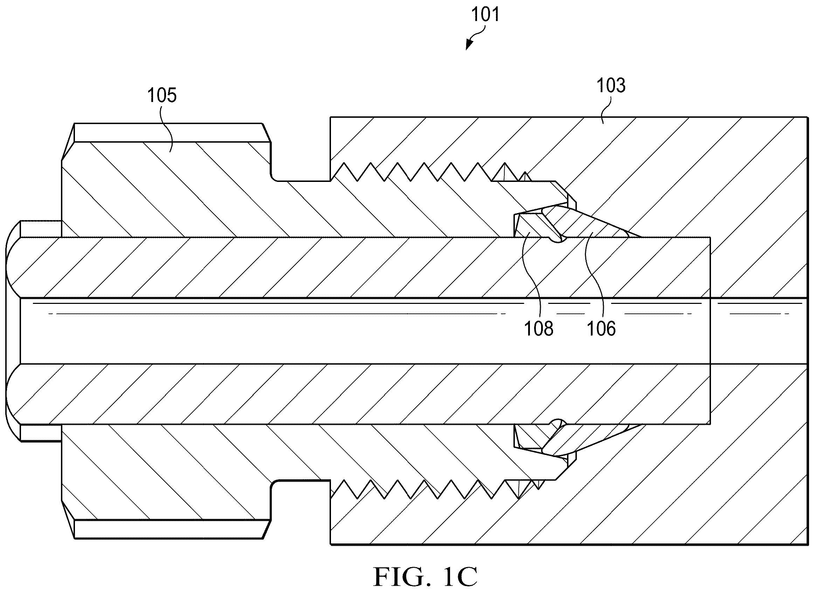

FIG. 1C illustrates an example of a tube fitting 101 that uses a male nut 105 that threads into a female fitting 103. As shown in FIG. 1C, the front ferrule 106 and the rear ferrule 108 can still be driven into the connection between the female fitting 103 and the nut 105 to reinforce the connection and create a seal within the connection.

The various embodiments of this disclosure provide for improved twin ferrule tube fitting designs that provide various benefits including that the seals for the fittings of this disclosure can penetrate into harder types of tubing, a reduced amount of force can be used to drive the ferrules of this disclosure into the tubing, the tube fittings of this disclosure have higher pressure ratings, and the tube fittings of this disclosure can include an indicator to determine whether the ferrules are misoriented or mis-installed, or to indicate a proper installation. These benefits are achieved in the various embodiments of this disclosure by providing an improved butt seal at a tube end to body interface, a socket-style rear ferrule that can have a concave or convex design, and a built-in fitting makeup indicator using one or multiple grooves. Although this disclosure describes and illustrates tube fitting designs that use male nuts, it will be understood that various beneficial concepts of this disclosure could also be used for female nut fittings.

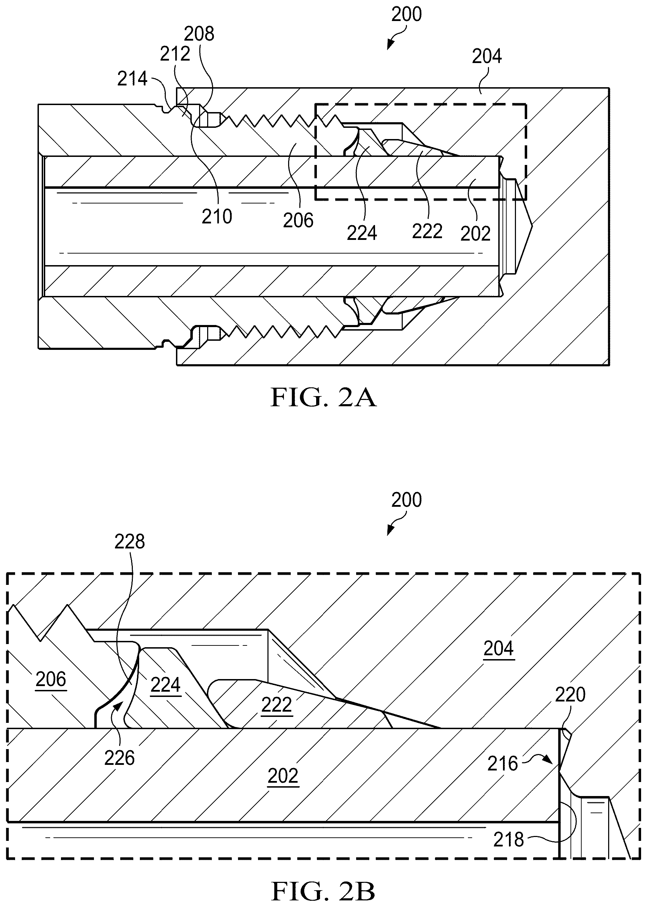

FIGS. 2A-4B illustrate example twin ferrule tube fittings in accordance with this disclosure. FIGS. 2A and 2B illustrate one example twin ferrule tube fitting 200 in accordance with this disclosure. The tube fitting 200 includes a tube 202 around which a body 204 of the fitting is sleeved. The body receives a male nut 206 that is inserted and threaded into the body. The fitting 200 also includes a hard stop 208 that is created by an angled surface 210 of an interior of the body 204, which contacts a protrusion 212 of the male nut 206. The hard stop 208 creates a point at which movement of the male nut 206 into the body is stopped, and creates a firm connection between the body and the male nut.

As also shown in FIG. 2A, the tube fitting 200 includes a built-in fitting makeup indicator 214, which can include a groove in the outer surface of the male nut. As also shown in FIG. 2B, the tube fitting 200 includes a butt seal 216 created by a surface 218 of the tube 202 contacting an inner surface 220 of the body 204. The inner surface 220 of the body 204 that contacts the surface 218 of the tube 202 to create the butt seal 216, as further described in this disclosure, can be shaped such that the butt seal 216 is moved outwards and with reduced angles compared to prior butt seals, which provides better performance with harder types of tubes.

As also shown in FIGS. 2A and 2B, the tube fitting 200 includes a front ferrule 222 and a rear ferrule 224 with improved shapes to better drive the front ferrule 222 and the rear ferrule 224 into the tube 202. For example, the rear ferrule 224 includes a socket-style interface 226 between the rear ferrule 224 and the male nut 206 that, due to reduced contact area, also acts to reduce the force required to drive the front ferrule 222 and the rear ferrule 224 into the tube 202.

Although FIGS. 2A and 2B illustrate one example of a tube fitting 200, various changes may be made to FIGS. 2A and 2B. For example, various components in FIGS. 2A and 2B may be combined, further subdivided, replicated, rearranged, or reshaped according to particular needs. Also, one or more additional components may be included if needed or desired.

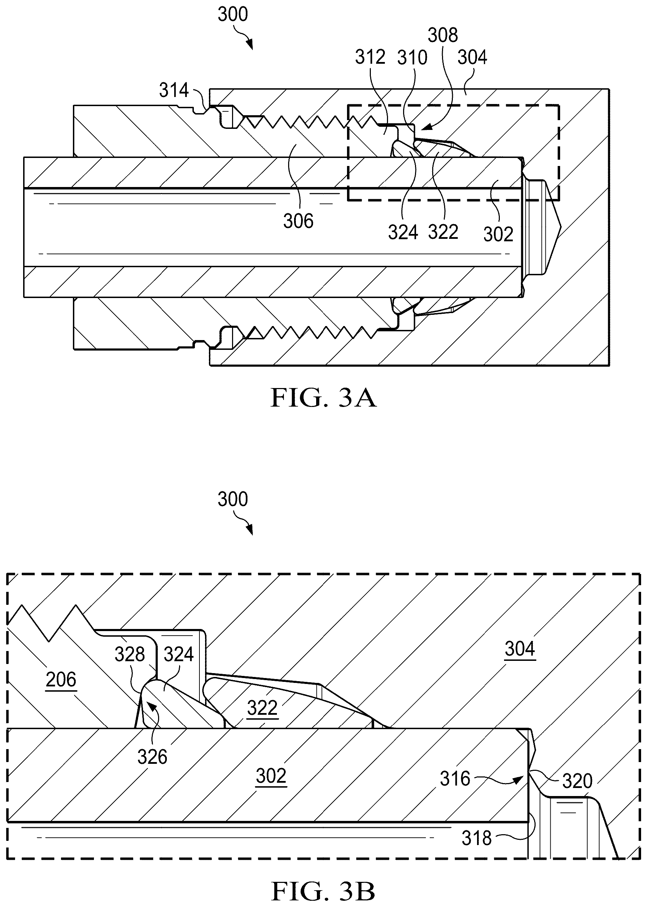

For instance, FIGS. 3A and 3B illustrate another example twin ferrule tube fitting 300 in accordance with this disclosure. Like that described with respect to FIG. 2A and 2B, the tube fitting 300 includes a tube 302 around which a body 304 of the fitting is sleeved. The body 304 receives a male nut 306 that is inserted and threaded into the body 304. The fitting 300 also includes a hard stop 308 that is created by a surface 310 of an interior of the body 304, which contacts a protrusion 312 of the male nut 306. In FIGS. 3A and 3B, the hard stop 308 is created by the surface 310 that is a wall further within the fitting 300 near and above a front ferrule 322. The hard stop 308 creates a point at which movement of the male nut 306 into the body 304 is stopped, and creates a firm connection between the body 304 and the male nut 306. As also shown in FIG. 3B, the tube fitting 300 includes a built-in fitting makeup indicator 314, which can include a groove in the outer surface of the male nut 306.

As also shown in FIG. 3B, the tube fitting 300 includes a butt seal 316 created by a surface 318 of the tube 302 contacting an inner surface 320 of the body 304. The inner surface 320 of the body 304 that contacts the surface 318 of the tube 302 to create the butt seal 316, as further described in this disclosure, can be shaped such that the butt seal 316 is moved outwards and with reduced angles compared to prior butt seals, which provides better performance with harder types of tubes.

As also shown in FIGS. 3A and 3B, the tube fitting 300 includes the front ferrule 322 and a rear ferrule 324 with improved shapes to better drive the front ferrule 322 and the rear ferrule 324 into the tube 302. As shown in FIGS. 3A and 3B, the front ferrule 322 and rear ferrule 324 are shaped differently than the front ferrule 222 and rear ferrule 224 of FIGS. 2A and 2B. In FIGS. 2A and 2B, the rear ferrule 224 is concave such that a convex portion 228 of the male nut 206 interfaces with the rear ferrule 224. Here, in FIGS. 3A and 3B, the rear ferrule 324 is a convex rear ferrule and interfaces with a concave portion 328 of the male nut. With respect to the front ferrule 222 in FIGS. 2A and 2B, the front ferrule 222 is shorter than the front ferrule 322 of FIGS. 3A and 3B, and the front ferrule 222 of FIGS. 2A and 2B, due to the rounder curve of the front ferrule 222, contacts more surface area of the rear ferrule 224, whereas, in FIGS. 3A and 3B, the front ferrule 322 has a sharper angle and contacts less surface area of the rear ferrule 324 due to the respective shapes of the front and rear ferrules. It will be understood that the shapes of the rear ferrules and front ferrules of FIGS. 2A and 2B and FIGS. 3A and 3B can achieve similar benefits, as described in this disclosure. For example, the rear ferrules 224 and 324 include the socket-style interfaces 226, 326 between the rear ferrules 224, 324 and the male nuts 206, 306 that, due to reduced contact area, also act to reduce the force required to drive all the ferrules into the tubes 202, 302.

Although FIGS. 3A and 3B illustrates one example of a tube fitting 300, various changes may be made to FIGS. 3A and 3B. For example, various components in FIGS. 3A and 3B may be combined, further subdivided, replicated, rearranged, or reshaped according to particular needs. Also, one or more additional components may be included if needed or desired.

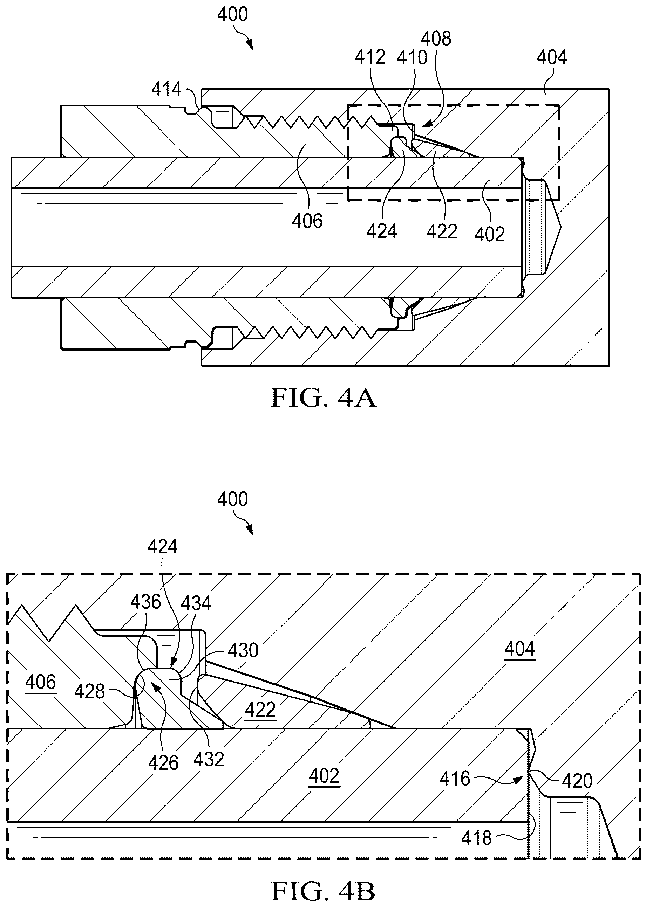

As yet another example, FIGS. 4A and 4B illustrate another example twin ferrule tube fitting 400 in accordance with this disclosure. Like that described with respect to FIGS. 2A and 2B and FIGS. 3A and 3B, the tube fitting 400 includes a tube 402 around which a body 404 of the fitting is sleeved. The body 404 receives a male nut 406 that is inserted and threaded into the body 404. The fitting 400 also includes a hard stop 408 that is created by a surface 410 of an interior of the body 404, which contacts a protrusion 412 of the male nut 406. In FIGS. 4A and 4B, like with FIGS. 3A and 3B, the hard stop 408 is created by the surface 410 that is a wall further within the fitting 400 near and above a front ferrule 422. As also shown in FIGS. 4A and 4B, the tube fitting 400 includes a built-in fitting makeup indicator 414, which can include a groove in the outer surface of the male nut 406.

As also shown in FIGS. 4A and 4B, the tube fitting 400 includes a butt seal 416 created by a surface 418 of the tube 402 contacting an inner surface 420 of the body 404. The inner surface 420 of the body 404 that contacts the surface 418 of the tube 402 to create the butt seal 416, as further described in this disclosure, can be shaped such that the butt seal 416 is moved outwards and with reduced angles compared to prior butt seals, which provides better performance with harder types of tubes. In FIGS. 4A and 4B, the inner surface 420 of the body 404 that protrudes out to contact the tube 402 and create the butt seal 416 is of a different shape than that of FIGS. 2A and 2B and FIGS. 3A and 3B. Here, in FIGS. 4A and 4B, this protrusion of the inner surface 420 of the body 416 has a rounder edge and is less angled than in FIGS. 2A and 2B and FIGS. 3A and 3B.

As also shown in FIGS. 4A and 4B, the tube fitting 400 includes the front ferrule 422 and a rear ferrule 424 with improved shapes compared to previously known ferrules to better drive the front ferrule 422 and the rear ferrule 424 into the tube 402. As shown in FIGS. 4A and 4B, the front ferrule 422 and the rear ferrule 424 are shaped differently than the front ferrules and rear ferrules of FIGS. 2A and 2B and FIGS. 3A and 3B. In FIGS. 4A and 4B, like with FIGS. 3A and 3B, the rear ferrule 424 is a convex rear ferrule and interfaces with a concave portion 428 of the male nut 406, but, in FIGS. 4A and 4B, the shape of the rear ferrule 424 has a head portion 430 that is curved on one side to fit within the curved concave portion 428 of the male nut 406. With respect to the front ferrule 422, the front ferrule 422 of FIGS. 4A and 4B has a substantially flat edge 432 that fits against a substantially flat portion 434 of the head portion 430 of the rear ferrule 424 that is disposed on an opposite side of the head portion 430 from a curved portion 436 of the rear ferrule 424 (the curved portion that fits within the curved concave portion 428 of the male nut 406). It will be understood that the shapes of the rear ferrules and front ferrules of FIGS. 2A-4B can achieve similar benefits, as described in this disclosure. For example, the rear ferrules include socket-style interface 226, 326, 426 between the rear ferrules 224, 324, 424 and the male nuts 206, 306, 406 that, due to reduced contact area, also act to reduce the force required to drive all the ferrules into the tubes 202, 302, 402.

Although FIGS. 4A and 4B illustrate one example of a tube fitting 400, various changes may be made to FIGS. 4A and 4B. For example, various components in FIGS. 4A and 4B may be combined, further subdivided, replicated, rearranged, or reshaped according to particular needs. Also, one or more additional components may be included if needed or desired.

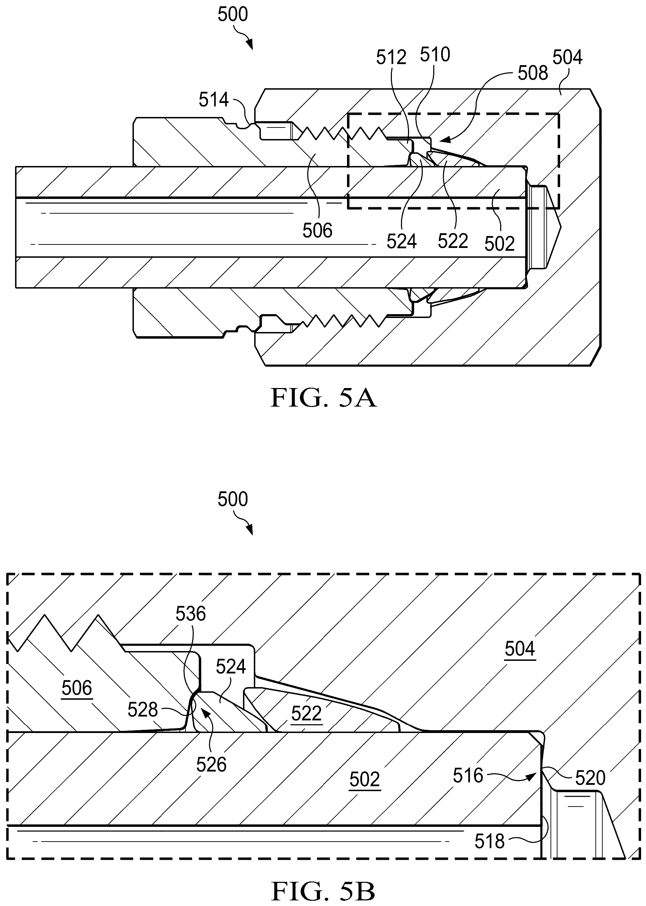

As yet another example, FIGS. 5A and 5B illustrate another example twin ferrule tube fitting 500 in accordance with this disclosure. Like that described with respect to FIGS. 2A-4B, the tube fitting 500 includes a tube 502 around which a body 504 of the fitting is sleeved. The body 504 receives a male nut 506 that is inserted and threaded into the body 504. The fitting 500 also includes a hard stop 508 that is created by a surface 510 of an interior of the body 504, which contacts a protrusion 512 of the male nut 506. In FIGS. 5A and 5B, like with FIGS. 3A and 3B and FIGS. 4A and 4B, the hard stop 508 is created by the surface 510 that is a wall further within the fitting 500 near and above a front ferrule 522. As also shown in FIGS. 5A and 5B, the tube fitting 500 includes a built-in fitting makeup indicator 514, which can include a groove in the outer surface of the male nut 506.

As also shown in FIGS. 5A and 5B, the tube fitting 500 includes a butt seal 516 created by a surface 518 of the tube 502 contacting an inner surface 520 of the body 504. The inner surface 520 of the body 504 that contacts the surface 518 of the tube 502 to create the butt seal 516, as further described in this disclosure, can be shaped such that the butt seal 516 is moved outwards and with reduced angles compared to prior butt seals, which provides better performance with harder types of tubes. In FIGS. 5A and 5B, the inner surface 520 of the body 504 that protrudes out to contact the tube 502 and create the butt seal 516 is of a different shape than that of FIGS. 2A-4B. Here, in FIGS. 5A and 5B, this protrusion of the inner surface 520 of the body 516 has a rounder edge and is less angled than in FIGS. 2A-4B.

As also shown in FIGS. 5A and 5B, the tube fitting 500 includes the front ferrule 522 and a rear ferrule 524 with improved shapes compared to previously known ferrules to better drive the front ferrule 522 and the rear ferrule 524 into the tube 502. As shown in FIGS. 5A and 5B, the front ferrule 522 and the rear ferrule 524 are shaped differently than the front ferrules and rear ferrules of FIGS. 2A-4B. In FIGS. 5A and 5B, the rear ferrule 524 is a convex rear ferrule and interfaces with a concave portion 528 of the male nut 506. The front ferrule 522 of FIGS. 5A and 5B fits against the rear ferrule 524. It will be understood that the shapes of the rear ferrules and front ferrules of FIGS. 2A-5B can achieve similar benefits, as described in this disclosure. For example, the rear ferrules include socket-style interface 226, 326, 426, 526 between the rear ferrules 224, 324, 424, 524 and the male nuts 206, 306, 406, 506 that, due to reduced contact area, also act to reduce the force required to drive all the ferrules into the tubes 202, 302, 402, 502.

Although FIGS. 4A and 4B illustrate one example of a tube fitting 400, various changes may be made to FIGS. 4A and 4B. For example, various components in FIGS. 4A and 4B may be combined, further subdivided, replicated, rearranged, or reshaped according to particular needs. Also, one or more additional components may be included if needed or desired.

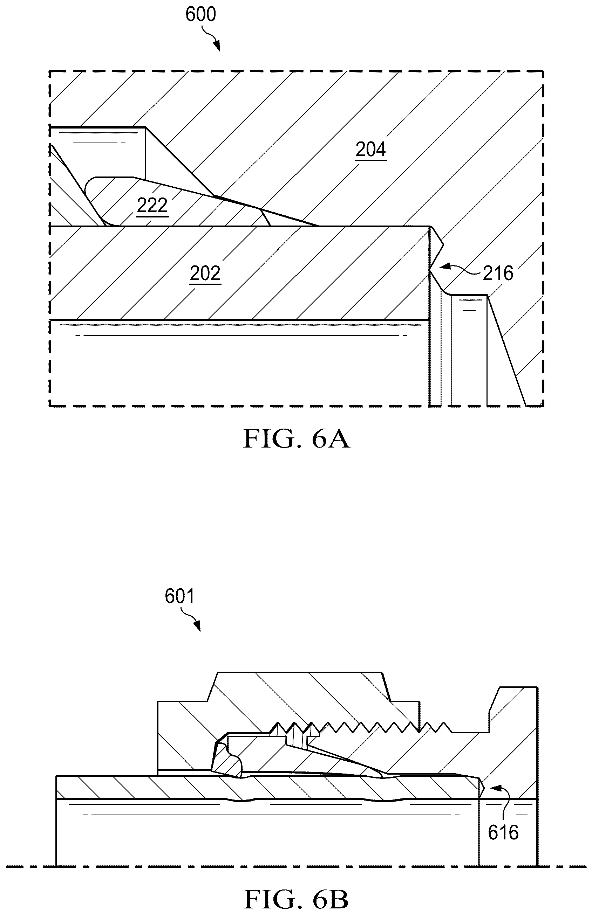

FIG. 6A illustrates an example tube fitting 600 showing an embodiment of the butt seal design in accordance with this disclosure. Although FIG. 6A is illustrated using a tube fitting similar to that shown in FIGS. 2A and 2B, it will be understood that the benefits of the improved butt seal design described with respect to FIG. 6A can be also achieved using the tube fittings illustrated and described with respect to FIGS. 3A and 3B or with respect to FIGS. 4A and 4B.

Previous butt seals were at the inner-most edge of the fitting and at a steeper angle. For example, FIG. 6B illustrates one such previous design 601 for a butt seal. As shown in FIG. 6B, the butt seal 616 on previous designs was further inboard and at different and steeper angles. Here, as shown in FIG. 6A, for the new, improved, tube fittings of this disclosure that are capable of being used for medium pressure fittings, the butt seal 216 is moved outwards and the angles are reduced for better performance with harder types of tubes. The butt seal 216 of FIG. 6A (as well as the butt seals 316 and 416 shown in FIGS. 3A-4B) provides for improved manufacturability and ability to penetrate harder types of tubing. The butt seal of the embodiments of this disclosure is unique in that it provides a secondary means of sealing directly at the fluid/gas media interface. The butt seal thus provides a useful redundant sealing mechanism, whereas the front ferrule to body seal is the primary sealing mechanism.

Although FIG. 6A illustrates one example of a tube fitting 600 showing the butt seal design, various changes may be made to FIG. 6A. For example, various components in FIG. 6A may be combined, further subdivided, replicated, rearranged, or reshaped according to particular needs. Also, one or more additional components may be included if needed or desired.

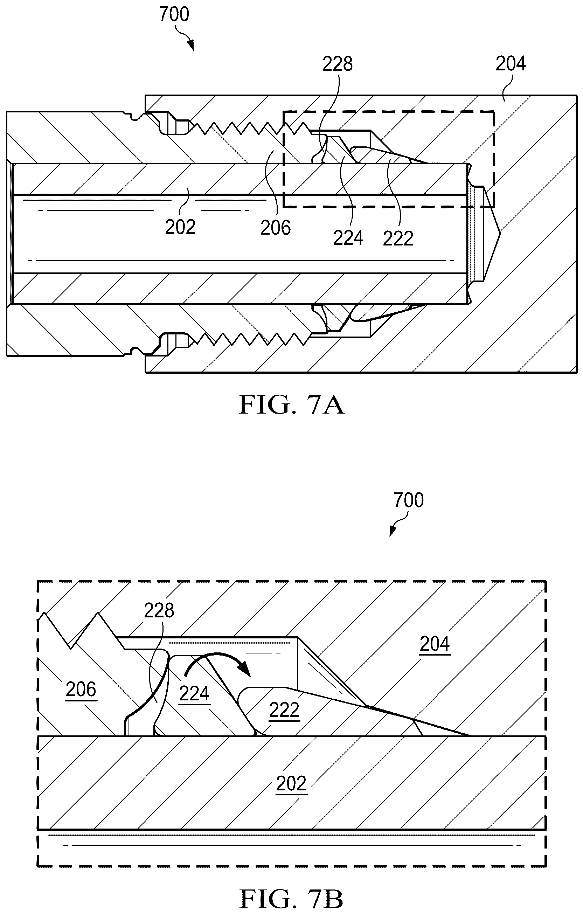

FIGS. 7A-7C illustrate an example socket-style rear ferrule interface 700 in accordance with this disclosure. It will be understood that the socket-style rear ferrule interface 700 can be the socket-style interface 226 shown in FIGS. 2A and 2B. Although the socket-style rear ferrule interface 700 is illustrated using the tube fitting 200 of FIGS. 2A and 2B, it will be understood that the benefits of the socket-style rear ferrule interface 700 can be realized with the other embodiments of this disclosure as well, such as with the tube fittings 300 or 400.

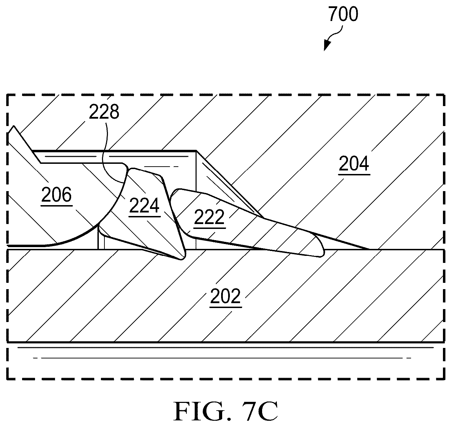

FIGS. 7A and 7B show the socket-style rear ferrule interface 700 before make up or securing of the tube 202 to the body 204. The socket-style rear ferrule interface 700 includes the concave rear ferrule 224 and a corresponding convex portion of the nut 206. As shown in FIG. 7C, after make up when the nut 206 is tightened into the body 204 of the fitting as part of securing the tube 202 to the body 204, the socket-style rear ferrule interface 700 forces a moment to rotate and drive the rear ferrule 224, as well as the front ferrule 222, into the tube 202. Due to reduced contact area between the nut 206 and the rear ferrule 224, the socket-style rear ferrule interface 700 also acts to reduce the force required to drive the front ferrule 222 and the rear ferrule 224 into the tube 202.

Although FIGS. 7A-7C illustrate one example of a socket-style rear ferrule interface 700, various changes may be made to FIGS. 7A-7C. For example, various components in FIGS. 7A-7C may be combined, further subdivided, replicated, rearranged, or reshaped according to particular needs. Also, one or more additional components may be included if needed or desired.

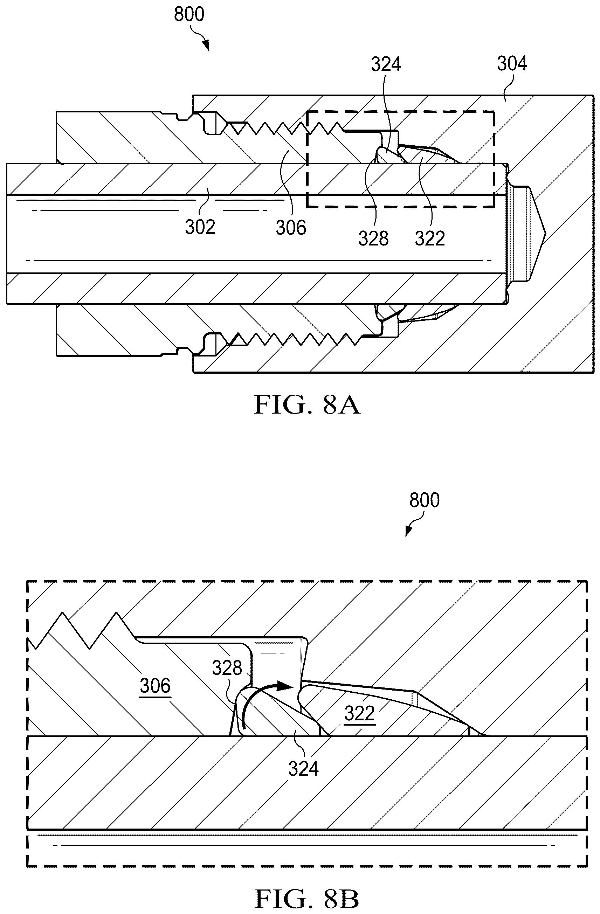

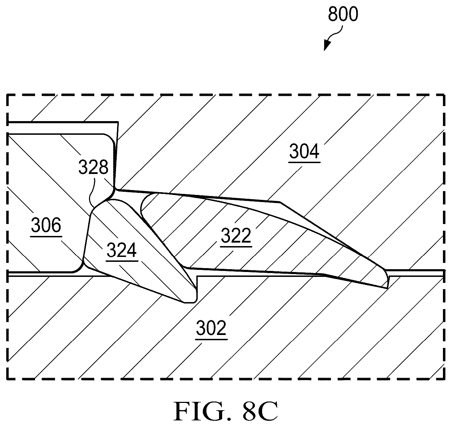

FIGS. 8A-8C illustrate another example socket-style rear ferrule interface 800 in accordance with this disclosure. It will be understood that the socket-style rear ferrule interface 700 can be the socket-style interface 326 shown in FIGS. 3A and 3B. Although the socket-style rear ferrule interface 800 is illustrated using the tube fitting 300 of FIGS. 3A and 3B, it will be understood that the benefits of the socket-style rear ferrule interface 800 can be realized with the other embodiments of this disclosure as well, such as with the tube fittings 200 or 400.

As shown in FIGS. 8A and 8B, the socket-style rear ferrule interface 800 includes the convex rear ferrule 324 and a corresponding concave portion 328 of the nut 306. As shown in FIG. 8B, after make up when the nut 306 is tightened into the body 204 of the fitting as part of securing the tube 202 to the body 204, the socket-style rear ferrule interface 800 forces a moment to rotate and drive the rear ferrule 324, as well as the front ferrule 322, into the tube 302. Due to reduced contact area between the nut 306 and the rear ferrule 324, the socket-style rear ferrule interface 800 also acts to reduce the force required to drive the front ferrule 322 and the rear ferrule 324 into the tube 302.

Although FIGS. 8A-8C illustrate one example of a socket-style rear ferrule interface 800, various changes may be made to FIGS. 8A-8C. For example, various components in FIGS. 8A-8C may be combined, further subdivided, replicated, rearranged, or reshaped according to particular needs. Also, one or more additional components may be included if needed or desired.

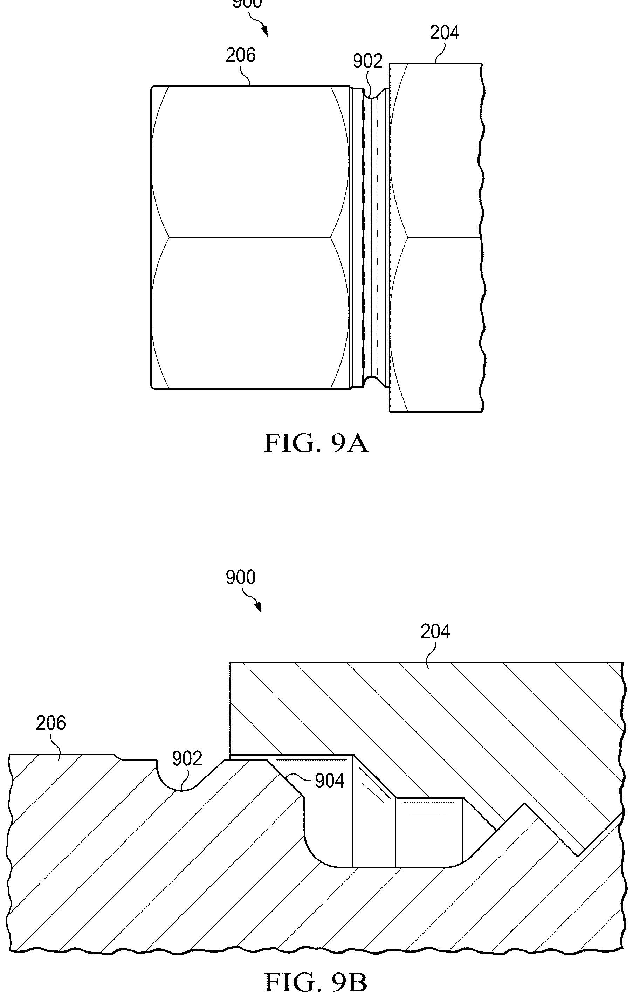

FIGS. 9A-9K illustrate various views of an example built-in fitting makeup indicator 900 in accordance with this disclosure. It will be understood that the built-in fitting makeup indicator 900 can be the built-in fitting makeup indicator 214 shown in FIGS. 2A and 2B, the built-in fitting makeup indicator 314 shown in FIGS. 3A and 3B, and/or the built-in fitting makeup indicator 414 shown in 4A and 4B.

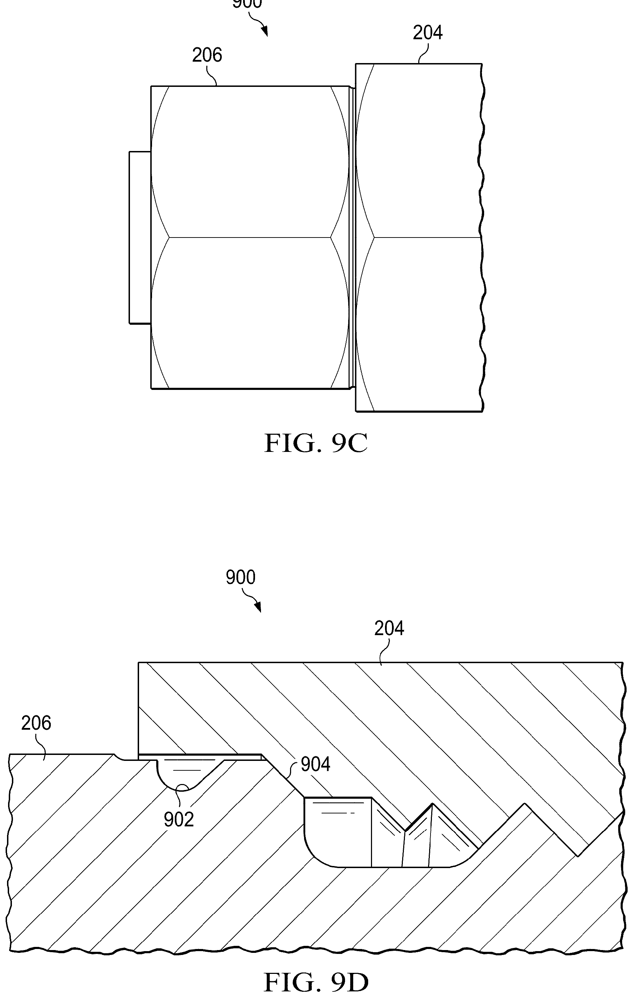

In order to provide a visual indicator showing whether ferrules are properly installed, misoriented, or mis-installed while the fitting is in the hand tight position, a groove or a series of grooves are designed into the male nut and body in various embodiments of this disclosure. For example, FIGS. 9A-9K show an indicator including a groove 902 in the male nut 206. As shown in FIGS. 9A and 9B, when the nut is in a finger tight position, the groove 902 is visible, whereas a chamfer 904 of the nut 206 is not visible. As such, the chamfer 904 can also be used as a visual indicator that the nut 206 has achieved a finger tight position, when the chamfer is not visible but the groove 902 is visible. FIGS. 9C and 9D show the nut 206 in a fully tightened position. As shown, the groove 902 is no longer visible once the nut 206 is in the fully tightened position and the chamfer 904 is also not visible. Therefore, as shown in FIGS. 9A-9D, the visual indicator(s) can provide an indication that the ferrules are properly installed.

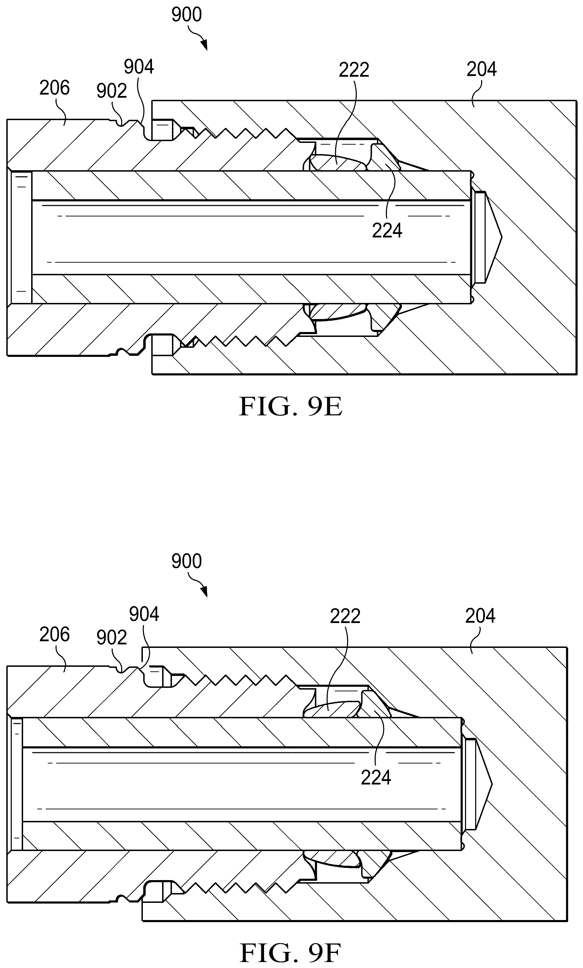

As noted herein, the visual indicator(s) can also indicate whether the ferrules are misoriented or mis-installed. FIGS. 9E-9K illustrate various examples of the twin ferrule tubing in various stages of mis-installation, and how the indicator 900 appears in those various stages of mis-installation in the finger tight condition. For example, FIG. 9E shows a stage of mis-installation in which the positions of the front ferrule 222 and the rear ferrule 224 are reversed. In this condition, the chamfer 904 and the groove 902 are both visible. FIG. 9F shows a stage of mis-installation in which the positions of the front ferrule 222 and the rear ferrule 224 are reversed, and the front ferrule 222 is backwards. In this condition, the chamfer 904 and the groove 902 are both visible.

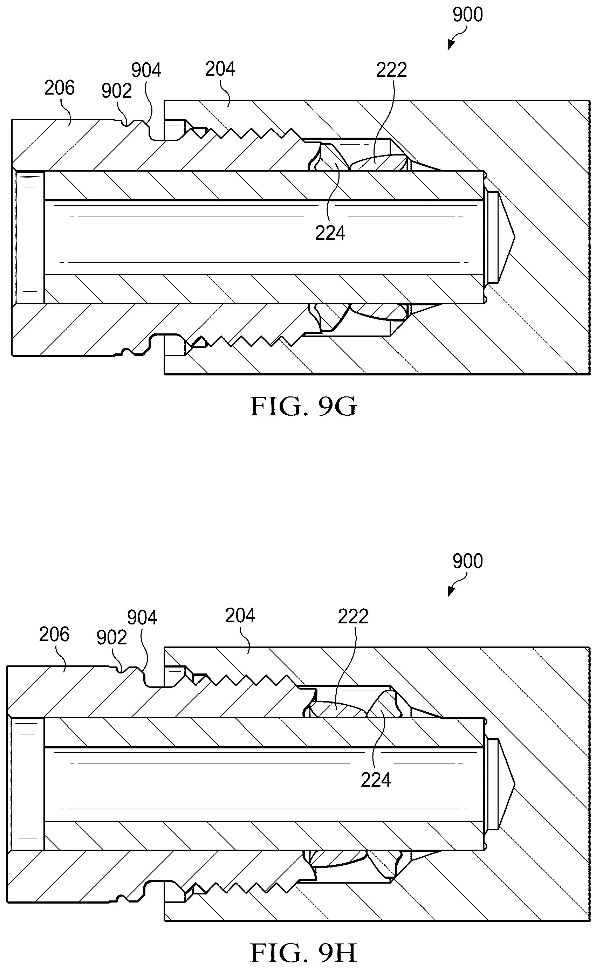

FIG. 9G shows a stage of mis-installation in which the front ferrule 222 is backwards. In this condition, the chamfer 904 and the groove 902 are both visible. FIG. 9H shows a stage of mis-installation in which the positions of the front ferrule 222 and the rear ferrule 224 are reversed, and the rear ferrule 224 is backwards. In this condition, the chamfer 904 and the groove 902 are both visible.

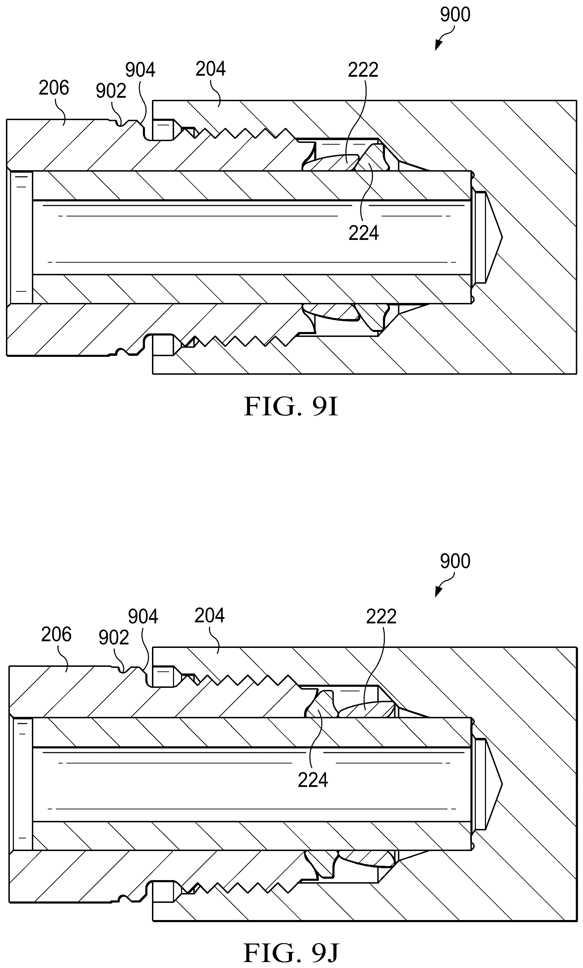

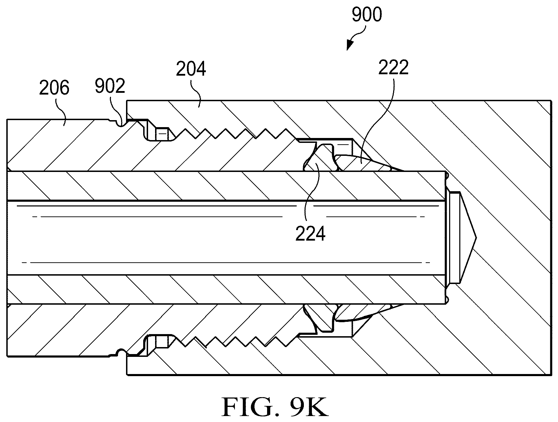

FIG. 9I shows a stage of mis-installation in which positions of the front ferrule 222 and the rear ferrule 224 are reversed, and both the front ferrule 222 and the rear ferrule 224 are backwards. In this condition, the chamfer 904 and the groove 902 are both visible. FIG. 9J shows a stage of mis-installation in which both the front ferrule 222 and the rear ferrule 224 are backwards. In this condition, the chamfer 904 and the groove 902 are both visible. FIG. 9K shows a stage of mis-installation in which the rear ferrule 924 is backwards. In this condition, the chamfer 904 is partially covered, and the groove 902 is visible.

Although FIGS. 9A-9K illustrate various views of an example built-in fitting makeup indicator 900, various changes may be made to FIGS. 9A-9K. For example, various components in FIGS. 9A-9K may be combined, further subdivided, replicated, rearranged, or reshaped according to particular needs. Also, one or more additional components may be included if needed or desired.

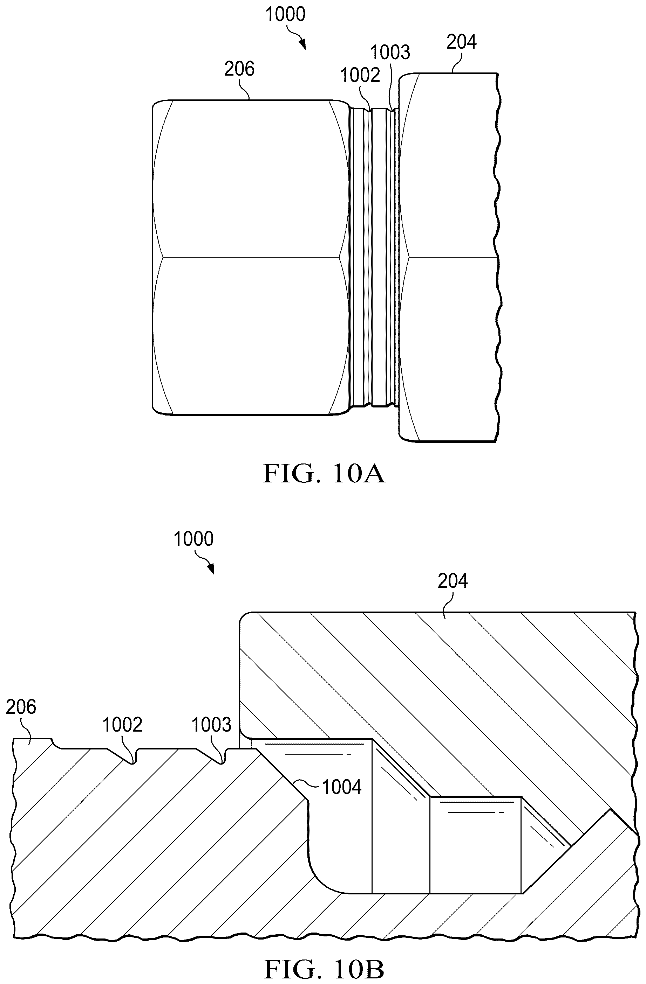

FIGS. 10A-10D illustrate various views of another example built-in fitting makeup indicator 1000 in accordance with this disclosure. It will be understood that the built-in fitting makeup indicator 1000 can be the built-in fitting makeup indicator 214 shown in FIGS. 2A and 2B, the built-in fitting makeup indicator 314 shown in FIGS. 3A and 3B, and/or the built-in fitting makeup indicator 414 shown in 4A and 4B.

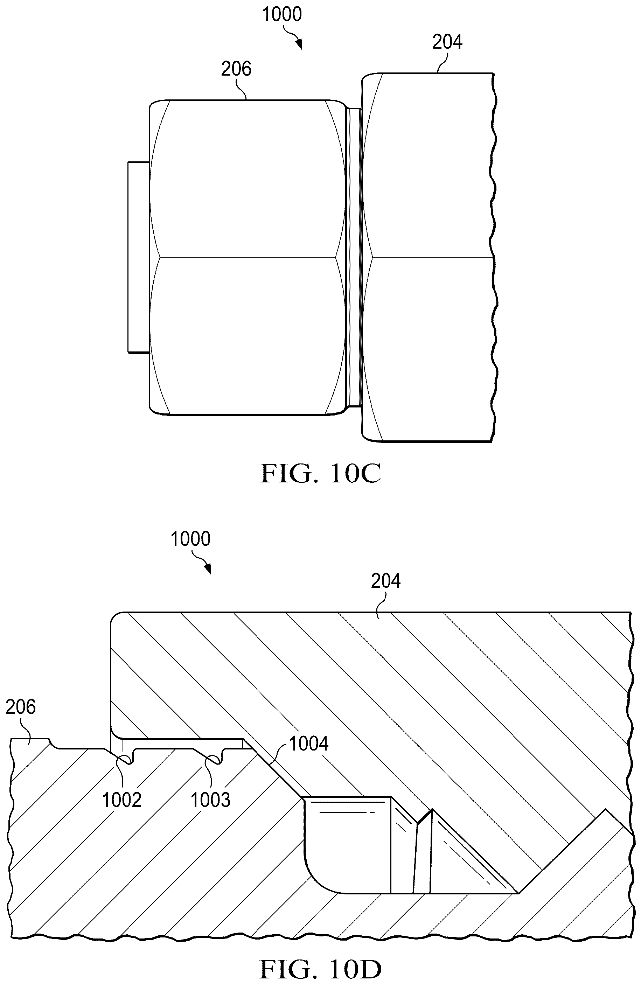

The indicator 1000 includes dual grooves, a first groove 1002 and a second groove 1003, in the male nut 206. As shown in FIGS. 10A and 10B, when the nut 206 is in a finger tight position, the dual grooves 1002, 1003 are visible, whereas a chamfer 1004 of the nut 206 is not visible. Visual identification of both dual grooves 1002, 1003 in the finger tight position indicates a mis-orientation of the ferrules, whereas, if only one groove (groove 1002) is visible, this indicated a correct installation in the finger tight position. As described in this disclosure, the chamfer 1004 can also be used as a visual indicator that the nut 206 has achieved a finger tight position when the chamfer 1004 is not visible. FIGS. 10C and 10D show the nut 206 in a fully tightened position. As shown in FIGS. 10C and 10D, the dual grooves 1002, 1003 are no longer visible once the nut 206 is in the proper fully tightened installation position.

Although FIGS. 10A-10D illustrate various views of an example built-in fitting makeup indicator 1000, various changes may be made to FIGS. 10A-10D. For example, various components in FIGS. 10A-10D may be combined, further subdivided, replicated, rearranged, or reshaped according to particular needs. Also, one or more additional components may be included if needed or desired.

In various examples of this disclosure, a twin ferrule tube fitting comprises a body configured to be received over a section of tubing, a nut configured to be received by the body over the section of tubing, a front ferrule disposed between the body and the nut, and a rear ferrule disposed between the body and the nut, wherein tightening the nut into the body causes the front ferrule and the rear ferrule to be driven into the section of tubing, and wherein tightening the nut into the body causes a butt seal to be formed between a protruding surface of an interior of the body and a surface of the tubing.

In one or more of the above examples, the rear ferrule includes a concave shape, and wherein the concave shape of the rear ferrule interfaces with a corresponding convex surface of the nut.

In one or more of the above examples, the rear ferrule includes a convex shape, and wherein the convex shape of the rear ferrule interfaces with a corresponding concave surface of the nut.

In one or more of the above examples, the rear ferrule includes a head portion, the head portion including a curved surface on one side of the head portion that interfaces with the corresponding concave surface of the nut, and a flat surface on an opposite side of the head portion from the curved surface, wherein the flat surface of the head portion of the rear ferrule interfaces with a flat surface of the front ferrule.

In one or more of the above examples, the twin ferrule tube fitting further comprises at least one indicator formed on the nut, wherein the at least one indicator is configured to indicate a tightening condition of the nut into the body.

In one or more of the above examples, the at least one indicator includes at least one groove formed in the nut.

In one or more of the above examples, the at least one groove is configured to be visible when the nut is partially tightened into the body and configured to not be visible when the nut is fully tightened into the body.

In one or more of the above examples, the at least one groove includes two grooves formed in the nut.

In one or more of the above examples, the at least one indicator includes a chamfer disposed on the nut that is configured to not be visible when the nut is correctly installed within the body and that is configured to be visible when the nut is in various states of mis-installation with the body.

In one or more of the above examples, the protruding surface of the interior of the body is part of an inclined surface of the body and the surface of the tubing is a substantially flat surface.

In one or more of the above examples, the twin ferrule tube fitting further comprises a hard stop created by contact between a protrusion of the nut and an angled surface of the interior of the body.

In one or more of the above examples, the hard stop is positioned distal from the front ferrule and the rear ferrule and adjacent an end potion of the body.

In one or more of the above examples, the hard stop is positioned adjacent to the front ferrule.

In various examples of this disclosure, a method of installing a twin ferrule tube fitting comprises tightening a nut received into a body over a section of tubing to cause a front ferrule and a rear ferrule to be driven into the section of tubing, wherein the body is received over the section of tubing, and wherein the front ferrule is disposed between the body and the nut and wherein the rear ferrule is disposed between the body and the nut, and tightening the nut into the body to cause a butt seal to be formed between a protruding surface of an interior of the body and a surface of the tubing.

In one or more of the above examples, the rear ferrule includes a concave shape, and wherein the concave shape of the rear ferrule interfaces with a corresponding convex surface of the nut during tightening of the nut received into the body.

In one or more of the above examples, the rear ferrule includes a convex shape, and wherein the convex shape of the rear ferrule interfaces with a corresponding concave surface of the nut during tightening of the nut received into the body.

In one or more of the above examples, the rear ferrule includes a head portion, the head portion including a curved surface on one side of the head portion that interfaces with the corresponding concave surface of the nut during tightening of the nut received into the body, and a flat surface on an opposite side of the head portion from the curved surface, wherein the flat surface of the head portion of the rear ferrule interfaces with a flat surface of the front ferrule during tightening of the nut received into the body.

In one or more of the above examples, the method further comprises using at least one indicator formed on the nut to verify a tightening condition of the nut into the body, wherein the at least one indicator includes at least one groove formed in the nut, and wherein the at least one groove is visible when the nut is partially tightened into the body and not visible when the nut is fully tightened into the body.

In one or more of the above examples, the method further comprises using at least one indicator formed on the nut to verify a tightening condition of the nut into the body, wherein the at least one indicator includes a chamfer disposed on the nut that is not visible when the nut is correctly installed within the body and that is visible when the nut is in various states of mis-installation with the body.

In one or more of the above examples, the method further comprises encountering a hard stop during tightening of the nut created by contact between a protrusion of the nut and an angled surface of the interior of the body.

Although this disclosure has been described with reference to various example embodiments, various changes and modifications may be suggested to one skilled in the art. It is intended that this disclosure encompass such changes and modifications as fall within the scope of the appended claims.

## Claims

1. A twin ferrule tube fitting comprising:
a body configured to be received over a section of tubing;
a nut configured to be received by the body over the section of tubing;
a front ferrule disposed between the body and the nut; and
a rear ferrule disposed between the body and the nut,
wherein tightening the nut into the body causes the front ferrule and the rear ferrule to be driven into the section of tubing, and
wherein tightening the nut into the body causes a butt seal to be formed between a protruding surface of an interior of the body and a surface of the tubing.

2. The twin ferrule tube fitting of claim 1, wherein the rear ferrule includes a concave shape, and wherein the concave shape of the rear ferrule interfaces with a corresponding convex surface of the nut;
or, wherein the rear ferrule includes a convex shape, and wherein the convex shape of the rear ferrule interfaces with a corresponding concave surface of the nut.

3. The twin ferrule tube fitting of claim 2 second alternative, wherein the rear ferrule includes a head portion, the head portion including:
a curved surface on one side of the head portion that interfaces with the corresponding concave surface of the nut; and
a flat surface on an opposite side of the head portion from the curved surface, wherein the flat surface of the head portion of the rear ferrule interfaces with a flat surface of the front ferrule.

4. The twin ferrule tube fitting of claim 1, further comprising at least one indicator formed on the nut, wherein the at least one indicator is configured to indicate a tightening condition of the nut into the body.

5. The twin ferrule tube fitting of claim 4, wherein the at least one indicator includes at least one groove formed in the nut.

6. The twin ferrule tube fitting of claim 5, wherein the at least one groove is configured to be visible when the nut is partially tightened into the body and configured to not be visible when the nut is fully tightened into the body.

7. The twin ferrule tube fitting of claim 6, wherein the at least one groove includes two grooves formed in the nut.

8. The twin ferrule tube fitting of claim 4, wherein the at least one indicator includes a chamfer disposed on the nut that is configured to not be visible when the nut is correctly installed within the body and that is configured to be visible when the nut is in various states of mis-installation with the body.

9. The twin ferrule tube fitting of claim 1, wherein the protruding surface of the interior of the body is part of an inclined surface of the body and the surface of the tubing is a substantially flat surface.

10. The twin ferrule tube fitting of claim 1, further comprising a hard stop created by contact between a protrusion of the nut and an angled surface of the interior of the body.

11. The twin ferrule tube fitting of claim 10, wherein the hard stop is positioned distal from the front ferrule and the rear ferrule and adjacent an end potion of the body;
or, wherein the hard stop is positioned adjacent to the front ferrule.

12. A method of installing a twin ferrule tube fitting, the method comprising:
tightening a nut received into a body over a section of tubing to cause a front ferrule and a rear ferrule to be driven into the section of tubing,
wherein the body is received over the section of tubing, and
wherein the front ferrule is disposed between the body and the nut and wherein the rear ferrule is disposed between the body and the nut; and
tightening the nut into the body to cause a butt seal to be formed between a protruding surface of an interior of the body and a surface of the tubing.

13. The method of claim 12, wherein the rear ferrule includes a concave shape, and wherein the concave shape of the rear ferrule interfaces with a corresponding convex surface of the nut during tightening of the nut received into the body;
or, wherein the rear ferrule includes a convex shape, and wherein the convex shape of the rear ferrule interfaces with a corresponding concave surface of the nut during tightening of the nut received into the body.

14. The method of claim 13 second alternative, wherein the rear ferrule includes a head portion, the head portion including:
a curved surface on one side of the head portion that interfaces with the corresponding concave surface of the nut during tightening of the nut received into the body; and
a flat surface on an opposite side of the head portion from the curved surface, wherein the flat surface of the head portion of the rear ferrule interfaces with a flat surface of the front ferrule during tightening of the nut received into the body.

15. The method of claim 12, further comprising using at least one indicator formed on the nut to verify a tightening condition of the nut into the body, wherein the at least one indicator includes at least one groove formed in the nut, and wherein the at least one groove is visible when the nut is partially tightened into the body and not visible when the nut is fully tightened into the body;
or, further comprising using at least one indicator formed on the nut to verify a tightening condition of the nut into the body, wherein the at least one indicator includes a chamfer disposed on the nut that is not visible when the nut is correctly installed within the body and that is visible when the nut is in various states of mis-installation with the body;
or, further comprising encountering a hard stop during tightening of the nut created by contact between a protrusion of the nut and an angled surface of the interior of the body.
